# FASCICULE DE BREVET EUROPEEN

(11) **EP 0 360 067 B1**
(45) Date de publication et mention de la délivrance du brevet: **31.03.1993**
(21) Numéro de dépôt: 89116335.4
(22) Date de dépôt: 05.09.1989
(51) Int. Cl.: C22C 18/00, H01M 4/42

(54) **Alliage de zinc pour godets de piles électrochimiques**
Zinklegierungen für Behälter von elektrochemischen Batterien
Zinc alloys for electrochemical battery cans

(30) Priorité: 23.09.1988 BE 8801088
(43) Date de publication de la demande: 28.03.1990
(73) Titulaire: n.v. UNION MINIERE s.a., B-6001 Marcinelle (Charleroi) (BE)
(72) Inventeur: Skenazi, André, B-3030 Heverlee (BE); Strauven, Ivan Alphonse J., B-3580 Neerpelt (BE); Cauwe, Michel Louis R.M.J., B-3583 Overpelt (BE)
(74) Mandataire: Saelemaekers, Juul

(56) Documents cités:
- FR-A- 2 078 812
- US-A- 3 383 297
- CHEMICAL ABSTRACTS, vol. 48, 1954, page 48, colonne 8084b, Columbus, Ohio, US; T. TOTSU: "Zinc used for dry cells", & FUSO METALS 2, pages 178-82(1950)
- CHEMICAL ABSTRACTS, vol. 90, 1979, page 497, résumé no. 31123e, Columbus, Ohio, US; & JP-A-78 100 125 (NIHON BOSHOKU KOGYO K.K.) 14-02-1977

## Description

La présente invention se rapporte à des alliages de zinc plombifères pour godets de piles électrochimiques.

Un alliage de zinc plombifère connu pour godets de piles contient, outre du zinc et des impuretés inévitables, 0,2-0,3 % de plomb et 0,05-0,07 % de cadmium (par zinc on entend ici et ci-après du zinc raffiné thermiquement ou électrolytiquement, et par % pourcentage en poids). Cet alliage connu a l'inconvénient de contenir l'élément toxique Cd.

Un autre alliage de zinc plombifère connu pour godets de piles contient, outre du zinc et des impuretés inévitables, seulement 0,4-0,8 % de plomb. Il est vrai que cet alliage ne contient pas de cadmium, mais sa résistance mécanique est inférieure à celle de l'alliage au cadmium.

Le but de la présente invention est de fournir des alliages de zinc plombifères pour godets de piles, qui ne présentent pas les inconvénients des alliages connus, mentionnés ci-dessus, et qui ont en outre également une résistance mécanique supérieure et une meilleure résistance à la corrosion que l'alliage connu au Cd.

Les alliages selon l'invention contiennent, outre du zinc et des impuretés inévitables, 0,05-0,8 % de Pb et
soit 0,005-1 % d'Al et 0,0005-0,1 % de MTR, MTR étant un métal des terres rares ou un mélange de métaux des terres rares,
soit 0,005-1 % de Mn,
soit 0,005-1,5 % d'un mélange d'Al, de MTR et de Mn.

La teneur en plomb s'élèvera au moins à 0,05 %; sinon les alliages sont trop fragiles, ce qui peut donner lieu à des difficultés lors de la mise en oeuvre, plus particulièrement lors du laminage de l'alliage coulé en bande et du poinçonnage à partir de cette bande de pastilles (qui sont ensuite extrudées en godets). La teneur en plomb s'élève de préférence au moins à 0,15 %. La teneur en plomb peut s'élever tout au plus à 0,8 %; en cas de teneurs en plomb supérieures la résistance mécanique est insuffisante et il peut y avoir des problèmes de corrosion. La préférence va de loin à une teneur en plomb de 0,2-0,3 %

S'il n'y a pas présence de manganèse, la teneur en aluminium s'élèvera au moins à 0,005 % et la teneur en MTR au moins à 0,0005 %; sinon la résistance mécanique et la résistance à la corrosion sont insuffisantes. La teneur en aluminium ne peut cependant dépasser 1 %, étant donné que pour des teneurs supérieures il y a formation d'une structure biphasée qui, en présence de plomb, est sujette à la corrosion intergranulaire. La teneur en MTR s'élève tout au plus à 0,1 % pour la simple raison que la grande affinité des métaux des terres rares pour l'oxygène rend extrêmement difficile de réaliser des teneurs supérieures; des teneurs supérieures feraient d'ailleurs diminuer la résistance mécanique de l'alliage. La teneur en aluminium s'élève de préférence à 0,01-0,1 % et la teneur en MTR à 0,001-0,01 %.

Il est à noter ici que Chemical Abstracts, vol. 48, 1954, page 48, colonne 8084b, Columbus, Ohio, US; T.Totsu : "Zinc used for dry cells", & Fuso Metals 2, pages 178-82(1950) mentionne qu'un alliage de zinc avec 0,07 à 0,4 % d'Al, 0,1 à 0,5 % de Pb et éventuellement 0,1 à 0,5% de Hg a de bonnes caractéristiques d'usinabilité et de résistance à la corrosion. Cet enseignement ne suggère pas d'ajouter à l'alliage Al-Zn-Pb un métal ou des métaux des terres rares pour améliorer sa résistance mécanique et sa résistance à la corrosion.

En cas d'absence d'Al et de MTR, la teneur en manganèse s'élèvera au moins à 0,005 %; sinon la résistance mécanique et la résistance à la corrosion sont de nouveau insuffisantes. La teneur en manganèse ne peut dépasser 1 %, puisqu'en cas de teneurs plus élevées en manganèse des composés intermétalliques Zn-Mn sont formés, qui peuvent donner lieu à des fissures lors du laminage de l'alliage. La teneur en manganèse s'élève de préférence à 0,01-0,1 %.

En cas de présence simultanée d'aluminium, de MTR et de manganèse, leur teneur totale s'élèvera au moins à 0,005 % pour assurer suffisamment de résistance mécanique et de résistance à la corrosion. Leur teneur totale ne peut dépasser 1,5 % pour éviter des problèmes de fissuration lors du laminage et/ou de corrosion intergranulaire. Le rapport atomique Al:Mn s'élève de préférence à 0,3-10 et le rapport atomique Al:MTR à 30-200. La teneur totale d'Al, de MTR et de Mn s'élève de préférence à 0,01-0,1 %.

MTR peut être n'importe quel métal des terres rares, comme par exemple La ou Ce, ou n'importe quel mélange de métaux de terres rares tel par exemple un mélange de La et de Ce. Pour des raisons économiques, MTR est de préférence du misch-metall, un alliage d'environ 45 % de Ce, 45 % de La et 10 % d'autres métaux des terres rares.

Les avantages des alliages selon l'invention sont illustrés par la description ci-après d'un essai comparatif.

Quatre alliages ont été préparés dont la composition se présente comme suit :
(1) Zn - 0,22 % Pb - 0,043 % Al - 0,001 % Ce - 0,001 % La
(2) Zn - 0,28 % Pb - 0,036 % Mn
(3) Zn - 0,23 % Pb - 0,059 % Cd
(4) Zn - 0,41 % Pb

Les alliages (1) et (2) sont des alliages selon l'invention, alors que les alliages (3) et (4) appartiennent à l'état de la technique mentionné avant.

Lors de la préparation des alliages on est toujours parti de zinc raffiné thermiquement et dans le cas de l'alliage (1) on a utilisé un alliage-mère d'aluminium contenant 4 % de La et 4 % de Ce.

Dans une installation industrielle les alliages ont été transformés en godets d'une manière traditionnelle : le produit coulé a été laminé en bandes, dont sont poinçonnées des pastilles de forme hexagonale et ces pastilles ont été extrudées en godets. 150 godets ont été produits ainsi de chaque alliage.

La résistance à la traction (en kg/mm2) a été déterminée au moyen d'un essai de traction : les éprouvettes de traction ont été découpées de la paroi du godet : pour les essais 10 éprouvettes ont été prises dans la direction de l'extrusion (A) et 10 perpendiculairement à la direction de l'extrusion (B); la vitesse de traction s'élevait à 1 cm/min.

Le comportement à la corrosion dans un électrolyte Leclanché typique a été évalué comme suit. Au moyen de la droite de TAFEL anodique et de la détermination du potentiel de corrosion (I corr en 10²µA/cm2) la densité de courant de corrosion a été déterminée en partant d'une valeur bêta de 30 mV/décade. Cette valeur est en effet considérée dans la littérature comme étant représentative pour le zinc et les alliages de zinc. Pour l'enregistrement des droites de TAFEL une rondelle prélevée au fond du godet a été utilisée. Les essais ont été réalisés tant de manière stationnaire qu'au moyen d'une électrode à disque tournante. La vitesse de balayage s'élevait à 1 mV/s. Trois mesurages stationnaires et trois mesurages à 1000 tr/min ont été effectués par alliage.

Les résultats des différents mesurages sont résumés au tableau ci-dessous.

**Tableau**

| Alliage | Résistance à la traction | | I corr. | |
|---|---|---|---|---|
| | A | B | 0 tr/m | 1000 tr/m |
| (1) | 17,4 | 16,1 | 2 | 2 |
| (2) | 19,- | 16,7 | 2 | 1 |
| (3) | 16,6 | 15,- | 4 | 3 |
| (4) | 14,9 | 14,1 | 3 | 2,5 |

Il ressort du tableau que tant la résistance mécanique que la résistance à la corrosion des alliages (1) et (2) selon l'invention sont manifestement meilleures que celles des alliages (3) et (4) de l'état de la technique.

## Revendications

1. Alliages de zinc plombifères pour godets de piles électrochimiques, caractérisés en ce qu'ils contiennent, outre du zinc et des impuretés inévitables, 0,05 - 0,8 % de Pb et
soit 0,005 - 1 % d'Al et 0,0005 - 0,1 % de MTR,
MTR étant un métal des terres rares ou un mélange de métaux des terres rares,
soit 0,005 - 1 % de Mn,
soit 0,005 - 1,5 % d'un mélange d'Al, de MTR et de Mn, les pourcentages étant exprimés en poids.

2. Alliage selon la revendication 1, caractérisé en ce qu'il contient au moins 0,15 % de Pb.

3. Alliage selon la revendication 2, caractérisé en ce qu'il contient 0,2 - 0,3 % de Pb.

4. Alliage selon la revendication 1, 2 ou 3, caractérisé en ce qu'il contient, outre Zn, Pb et des impuretés inévitables, 0,01 - 1 % d'Al et 0,001 - 0,01 % de MTR.

5. Alliage selon la revendication 1, 2 ou 3, caractérisé en ce qu'il contient, outre Zn, Pb et des impuretés inévitables, 0,01 - 0,1 % de Mn.

6. Alliage selon la revendication 1, 2 ou 3, caractérisé en ce qu'il contient Al, MTR et Mn et que le rapport atomique Al:Mn va de 0,3 à 10 et le rapport atomique Al:MTR de 30 à 200.

7. Alliage selon la revendication 1, 2, 3 ou 6, caractérisé en ce que la teneur totale en Al, MTR et Mn s'élève à 0,01 - 0,1 %.

8. Alliage selon une des revendications précédentes, caractérisé en ce que MTR est du misch-metall.

9. Pièce coulée destinée à être transformée en godets pour piles électrochimiques, caractérisée en ce qu'elle consiste en un alliage selon une des revendications précédentes.

10. Bande laminée destinée à être poinçonnée en pastilles, caractérisée en ce qu'elle consiste en un alliage selon une des revendications 1-8.

11. Pastille destinée à être extrudée en godet pour pile électrochimique, caractérisée en ce qu'elle consiste en un alliage selon une des revendications 1-8.

12. Godet pour pile électrochimique, caractérisé en ce qu'il consiste en un alliage selon une des revendications 1-8.

## Claims

1. Lead bearing zinc alloys for electrochemical battery cans, characterized in that they contain, besides zinc and unavoidable impurities, 0.05-0.8 % of lead and
either 0.005 - 1 % of Al and 0.0005 - 0.1 % of REM, REM being a rare earth metal or a mixture of rare earth metals
or 0.005 - 1 % of Mn
or 0.005 - 1.5 % of a mixture of Al, REM and Mn, the percentages are expressed in percents by weight.

2. Alloy according to claim 1, characterized in that it contains at least 0.15 % of Pb.

3. Alloy according to claim 2, characterized in that it contains 0.2 - 0.3 % of Pb.

4. Alloy according to claim 1, 2 or 3, characterized in that it contains, besides Zn, Pb and unavoidable impurities, 0.01 - 1 % of Al and 0.001 - 0.01 % of REM.

5. Alloy according to claim 1, 2 or 3, characterized in that it contains, besides Zn, Pb and unavoidable impurities, 0.01 - 0.1 % of Mn.

6. Alloy according to claim 1, 2 or 3, characterized in that it contains Al, REM and Mn and that the atomic ratio Al: Mn ranges from 0.3 to 10 and the atomic ratio Al:REM from 30 to 200.

7. Alloy according to claim 1, 2, 3 or 6, characterized in that the total content of Al, REM and Mn is 0.01 - 0.1 %.

8. Alloy according to one of the preceding claims, characterized in that REM is misch metal.

9. Casting for being processed into cans for electrochemical batteries, characterized in that it consists of an alloy according to one of the preceding claims.

10. Rolled strip for being punched into slugs, characterized in that it consists of an alloy according to one of the claims 1-8.

11. Slug for being extruded into an electrochemical battery can, characterized in that it consists of an alloy according to one of the claims 1-8.

12. Can for electrochemical battery, characterized in that it consists of an alloy according to one of the claims 1-8.

## Patentansprüche

1. Bleihaltige Zinklegierungen für Becher elektrochemischer Batterien, dadurch **gekennzeichnet,** daß
sie enthalten, neben Zink und unvermeidlichen Verunreinigungen, 0,05-0,8% Pb und
entweder 0,005 - 1% Al und 0,0005 - 0,1% SEM, wobei SEM ein Metall der Seltenen Erden oder ein Gemisch von Metallen der Seltenen Erden ist,
oder 0,005 - 1% Mn,
oder 0,005 - 1,5% eines Gemisches aus Al, SEM und Mn, wobei die Prozentsätze in Gewichtsprozenten ausgedrückt sind.

2. Legierung nach Anspruch 1, dadurch gekennzeichnet, daß sie mindestens 0,15% Pb enthält.

3. Legierung nach Anspruch 2, dadurch gekennzeichnet, daß sie 0,2 - 0,3% Pb enthält.

4. Legierung nach Anspruch 1, 2 oder 3, dadurch gekennzeichnet, daß sie, neben Zn, Pb und unvermeidlichen Verunreinigungen, 0,01 - 1% Al und 0,001 - 0,01% SEM enthält.

5. Legierung nach Anspruch 1, 2 oder 3, dadurch gekennzeichnet, daß sie, neben Zn, Pb und unvermeidlichen Verunreinigungen, 0,01 - 0,1% Mn enthält.

6. Legierung nach Anspruch 1, 2 oder 3, dadurch gekennzeichnet, daß sie Al, SEM und Mn enthält, und daß das Atomverhältnis von Al:Mn von 0,3 bis 10 und das Atomverhältnis von Al:SEM von 30 bis 200 reicht.

7. Legierung nach Anspruch 1, 2, 3 oder 6, dadurch gekennzeichnet, daß der Gesamtgehalt an Al, SEM und Mn 0,01 - 0,1% beträgt.

8. Legierung nach einem der vorhergehenden Ansprüche, dadurch gekennzeichnet, daß es sich bei SEM um ein Mischmetall handelt.

9. Gußstück, dazu bestimmt, in Becher für elektrochemische Batterien umgewandelt zu werden, dadurch gekennzeichnet, daß es aus einer Legierung nach einem der vorhergehenden Ansprüche besteht.

10. Gewalzter Streifen, dazu bestimmt, in Plättchen ausgestanzt zu werden, dadurch gekennzeichnet, daß er aus einer Legierung nach einem der Ansprüche 1 bis 8 besteht.

11. Plättchen, dazu bestimmt, in einen Becher für eine elektrochemische Batterie extrudiert zu werden, dadurch gekennzeichnet, daß es aus einer Legierung nach einem der Ansprüche 1 bis 8 besteht.

12. Becher für eine elektrochemische Batterie, dadurch gekennzeichnet, daß er aus einer Legierung nach einem der Ansprüche 1 bis 8 besteht.
